# EUROPÄISCHE PATENTANMELDUNG

(11) **EP 1 757 399 A1**
(43) Veröffentlichungstag der Anmeldung: **28.02.2007**
(21) Anmeldenummer: 06009806.8
(22) Anmeldetag: 12.05.2006
(51) Int. Cl.: B23K 26/24, B23K 26/32, B23K 26/42, B23K 103/04, B23K 101/34, B23K 101/18, B23K 101/00

(54) **Laserschweissverfahren zur Verbindung von zwei Materialen bei Auftragen eines Abstandspulver, mit zumindest einem beschichteten Material**

(30) Priorität: 25.08.2005 DE 102005040200
(71) Anmelder: Volkswagen Aktiengesellschaft, 38436 Wolfsburg (DE)
(72) Erfinder: Hammer, Thorge, 38479 Tappenbeck (DE); Peckmann, Claus, 38154 Königslutter (DE); Drexler, Jörg, 38440 Wolfsburg (DE)

(57) **Zusammenfassung**

Die Erfindung betrifft ein Laserschweißverfahren zur Verbindung von zwei Materialien, wobei zumindest eines der beiden Materialien eine Beschichtung aufweist und zwischen den Materialien ein Zwischenraum zum Entweichen von Schweißemissionen gebildet wird, wobei der Zwischenraum durch Auftragen eines Pulvers auf zumindest einem der beiden Materialien erzeugt wird und keine konstruktive Änderung der Materialien erfolgt.

## Beschreibung

Die Erfindung betrifft ein Laserschweißverfahren, gemäß dem Oberbegriff des unabhängigen Anspruchs.

Ein derartiges Laserschweißverfahren ist bereits in der EP 01 57 913 B1 beschrieben. Dort wird durch ein hierzu vorgesehenes, bewegliches Abstandsstück zwischen zwei Materialien ein Zwischenraum festgelegt, durch welchen die flüchtigen Bestandteile der Beschichtung, beispielsweise Öl oder Farbe, entweichen können.

Die DE 39 33 408 A1 beschreibt ebenfalls eine Schweißnaht, bei der zwei Bleche durch eingeprägte Noppen auf Distanz gehalten werden.

Bei einem Laserschweißverfahren nach der EP 10 05 944 A2 wird für insbesondere zinkbeschichtete Stahlbleche ebenfalls ein Zwischenraum vorgesehen, der in ähnlicher Weise auch bei einem Schweißverfahren nach der EP 01 78 394 A2 vorgeschlagen wird, um das ungehinderte Austreten der freiwerdenden Gase zu ermöglichen.

Hierzu kann nach der US 49 16 284 auch eine V-förmige Abwinklung an einem der beiden miteinander zu verschweißenden Bleche vorgesehen werden, um auf diese Weise eine Entlüftung zu erreichen.

In einem anderen Schweißverfahren nach der EP 07 71 605 A2 wird ein Entgasungsbereich für die freiwerdenden Dämpfe dadurch geschaffen, dass die Bleche vor dem Verschweißen im Nahtbereich unter einem spitzen Winkel aufeinander stoßend angeordnet werden und die Schweißnaht als Kehlnaht ausgebildet ist.

Die beiden Materialien können nach der DE 196 05 341 A1 auch bereits konstruktiv so gestaltet werden, dass sich einander überlappende Bereiche unter Bildung einer Spalte längs der anzubringenden Schweißnähte lediglich beinahe berühren.

Die vorgeschlagenen Maßnahmen zur Erzeugung eines Zwischenraumes weisen sämtlich den Nachteil auf, dass hierzu eine zusätzliche Formgebung, bzw. bereits eine entsprechende konstruktive Gestaltung der zu verschweißenden Materialien erforderlich ist, wodurch bei der praktischen Umsetzung ein erheblicher Aufwand entsteht. So sind beispielsweise bei der Karosserie eines Kraftfahrzeuges eine Vielzahl zusätzlicher Ausformungen erforderlich, die insbesondere unter Berücksichtigung der Festigkeit und Belastbarkeit der fertigen Karosserie zu einer Reihe von zusätzlichen Arbeits- und Konstruktionsschritten führen.

Es ist ferner durch die DE 197 57 245 A1 bekannt, ein Grundblech und ein Deckblech mittels eines Klebestreifens unter Druck miteinander zu verkleben. Dabei ist die äußere Kontur des Klebestreifens kleiner als die äußere Kontur des Deckbleches, so dass die Bleche an ihrem klebestreifenfreien Randbereich durch eine Schweißnaht miteinander verbunden werden können. Die Dicke des verwendeten Klebestreifens soll dabei mindestens 0,2 mm betragen, um ein ungehindertes Entweichen von verdampftem Beschichtungsmaterial aus dem Schweißnahtbereich zu ermöglichen.

Als nachteilig hat sich bei diesem Verfahren der zusätzliche Aufwand für die Klebeverbindung des Deckbleches mit dem Grundblech durch den Klebestreifen erwiesen. Hierdurch wird insbesondere die Positionierung der beiden Bleche relativ zueinander erschwert, da eine Korrektur der Position zunächst ein Ablösen der Klebeverbindung erfordert.

Die DE 100 53 789 A1 beschreibt ein Laserschweißverfahren zur Verbindung von zwei Materialien, bei dem der Zwischenraum durch Auftragen einer Strukturierung geschaffen wird. Es wird hier jedoch nur von einer allgemeinen Strukturierung gesprochen, die beispielsweise durch Auftragen einer Folie erreicht wird.

Aufgabe der Erfindung ist es, ein Laserschweißverfahren bereitzustellen, bei welchem auf einfache Weise ein Zwischenraum zum Entweichen von Schweißemissionen gebildet wird und dadurch die Schweißnahtqualität steigt.

Diese Aufgabe wird erfindungsgemäß mit den Merkmalen des unabhängigen Anspruchs gelöst.

Bevorzugte Ausführungsformen und Weiterbildungen der Erfindung sind den jeweiligen Unteransprüchen zu entnehmen.

Das erfindungsgemäße Laserschweißverfahren zur Verbindung von zwei Materialien, wobei zumindest eines der beiden Materialien eine Beschichtung aufweist und zwischen den Materialien ein Zwischenraum zum Entweichen von Schweißemissionen gebildet wird, sieht vor, dass der Zwischenraum durch Auftragen eines Pulvers auf zumindest einem der beiden Materialien erzeugt wird. Dabei sind die beiden Materialien oftmals Bauteile, beispielsweise einer Karosserie.

Der Zwischenraum zwischen den beiden Materialien wird erfindungsgemäß durch ein Pulver ausgebildet. Dabei dient das Pulver, das zumindest auf einem der beiden Materialien aufgebracht ist, dazu, den Abstand zwischen den beiden Materialien, herzustellen, so dass Schweißemissionen durch diesen Zwischenraum entweichen können.

Als Pulver wird hier eine Form der Zerteilung trockener fester Stoffe, die man durch Zerkleinern, d.h. Zerreiben oder Zerstoßen in der Reibschale, Mahlen in Mühlen oder als Folge von Zerstäubungs- oder Gefriertrocknung erhält, verstanden. Auch granulierte Materialien werden hier unter Pulver verstanden.

Mittels des Pulvers wird in einfacher Weise der für das Entweichen der freigesetzten Schweißemissionen bestimmte Zwischenraum geschaffen, ohne dass hierzu ein konstruktiver Eingriff, beispielsweise eine Umformung an den beiden Materialien erforderlich ist. Daher kann der Aufwand bei der Herstellung zur Einbringung des Zwischenraumes wesentlich reduziert werden, wobei das Verfahren problemlos in bereits bestehende Fertigungsabläufe eingebunden werden kann. Das Pulver ermöglicht dabei, dass die Schweißmissionen auf einfache Weise durch den Zwischenraum hinausgelangen. Der Zwischenraum dient somit als ein Entgasungsspalt. Ferner ist das Pulver universell an allen Überlappungsverbindungen einsetzbar.

In einer vorteilhaften Ausgestaltung sieht die Erfindung vor, dass nach Auftragen des Pulvers ein Auftrag mit Erhebungen in einem Bereich zwischen 0,1 mm und 0,3 mm, vorzugsweise 0,2 mm erzeugt wird. Bei Erhebungen in diesem Bereich wird ein ruhigerer Schweißprozess gewährleistet, da die Schweißemissionen einfach abgeführt werden können. Dies führt zu einer Verbesserung der Schweißnahtqualität.

Vorteilhafterweise wird als Pulver ein Zinkpulver verwendet. Dabei kann ein gekugeltes und/oder gemahlenes Zinkpulver verwendet werden. Zink als Auftragsmaterial fungiert als Opferanode und schützt das Bauteil bei einem korrosiven Angriff zusätzlich.

Es ist durchaus denkbar, auch andere Pulver bzw. granulierte Materialien zu verwenden, die einen gewissen Spanndruck der Spannwerkzeuge aushalten, ohne sich in die Materialoberfläche einzudrücken oder zerrieben zu werden, wie beispielsweise Nirostapulver, Zucker oder Strandsand in der entsprechenden Siebung.

Korrosionsfördernd wirken hierbei Pulver aus Kupfer oder bei denen Kupfer als Hauptlegierungsbestandteil enthalten ist.

Granulate, aus der medizinischen Strahltechnik die zur Säuberung von Humanimplantaten dienen, bestehen z.B. aus nicht rostendem Stahlpulver sind billig zu erwerben und nach einer entsprechenden Siebung auch für die Anwendung des hier beschriebenen Verfahrens anwendbar.

Vorteil bei der Verwendung eines elektrisch leitenden Pulver ist eine Nacharbeitbarkeit mittels Widerstandspunktschweißen.

Dabei hat es sich als vorteilhaft herausgestellt, wenn ein Zinkpulver mit einem Kornmitteldurchmesser von größer 0,2 mm verwendet wird. Dadurch wird sichergestellt, dass der Zwischenraum, der als Entgasungsspalt dient, genügend ausgebildet ist, und die Schweißemissionen einfach abgeführt werden.

Der harmonische Schweißeffekt entsteht bei einem Spalt von ca. 0,05 bis ca. 0,4 mm vorzugsweise 0,1 bis 0,25 mm. Bei dünnen Blechen hilft ein kleiner Spalt von etwa 0,05 mm, bei dicken Blechen z.B. 3 x 1,2 mm (Summe 3,6 mm) eher ein größerer Spalt 0,25 mm zur Entgasung beim Laserschweißen.

In einer vorteilhaften Ausgestaltungsform sieht die Erfindung vor, dass als Pulver ein Glaspulver verwendet wird. Glaspulver ist in den Anschaffungskosten besonders günstig und beeinflusst den Schweißprozess nicht negativ. Dabei sollte der Mittelwert der Korngröße des Glaspulvers bei etwa 0,18 mm liegen. Hierbei ist es von Vorteil, wenn ein Glaspulver mit kugeligförmigen Partikeln verwendet wird.

Hierbei hat es sich als vorteilhaft herausgestellt, wenn ein Gemisch aus Glaspulver und Öl verwendet wird. Die Materialien sind oftmals bereits vom Ziehprozess her schon mit Öl benetzt. Ferner haftet das Glaspulver besonders gut auf einem mit Öl benetzten Material. Es kann somit auf kostengünstige Weise ohne großen zusätzlichen Aufwand das Pulver auf das Material aufgebracht werden.

Hierbei hat sich gezeigt, dass es von Vorteil ist, wenn ein Öl verwendet wird, welches höherviskos ist.

Dabei ist es auch denkbar, dass ein Material verwendet wird, welches als Haftvermittler dienen kann. Auch Wasser ist hier denkbar.

Vorteilhafterweise wird das Pulver mittels Flamm- und/oder Plasmaspritzen aufgebracht. Das Pulver wird hierdurch mit einem geringen Aufwand aufgebracht und selbst komplex geformte Materialien können auf diese Weise mit Pulver versehen werden. Ferner kann dieses Verfahren problemlos in bereits bestehende Fertigungsabläufe eingebunden werden.

Vorteilhaft ist es, wenn das Pulver aufgestreut wird. Dieses Verfahren ist besonders einfach zu realisieren, kann manuell erfolgen und ist daher mit geringen Kosten verbunden.

Eine andere besonders zweckmäßige Abwandlung sieht vor, dass das Pulver mit einem Rollauftrag mittels Schwammrolle und/oder Tampondruckverfahren mit Formschwamm aufgetragen wird. Hierdurch wird das Verfahren vereinfacht und eine gleichmäßige Verteilung des Pulvers kann erfolgen.

Es hat sich als vorteilhaft herausgestellt, wenn eine gekörnte Oberfläche auf zumindest einem Material erzeugt wird und kein dichter Schichtauftrag auf der Oberfläche erfolgt. Dadurch wird gewährleistet, dass der Zwischenraum genügend groß ist, und die Schweißemissionen entweichen können.

Mit dem oben beschriebenen Verfahren ist es möglich, eine wasserdichte Schweißnaht zu erreichen und Löcher die zu Undichtigkeiten führen zu vermeiden. Dadurch entfallen hohe Aufwendungen bezüglich der Nacharbeit, was zu einer Kostenminimierung führt. Durch den harmonischen Schweißprozess, der mit dem oben beschriebenen Verfahren erzielt wird, werden die am Schweißprozess beteiligten Komponenten geschont und die Schutzglasstandzeit wird erhöht.

Die Erfindung wird nachfolgend anhand bevorzugter Ausführungsformen näher erläutet.

### Beispiel 1:

Um zwei Materialen miteinander zu verschweißen, soll ein Zwischenraum erzeugt werden, damit die Schweißemissionen durch diesen hinausgelangen können. Dazu wird die Oberfläche des einen Materials, welches bereits schon vom Ziehprozess her mit Öl benetzt ist, mit Glaspulver versehen. Das Aufbringen des Glaspulvers erfolgt manuell und/oder automatisch und wird auf die Oberfläche gebracht. Auch kann das Glaspulver mittels eines Rollschwamm auf das Bauteil aufgetragen werden. Hierbei wird der Rollschwamm leicht eingeölt und nimmt durch Rollen in einem Glaspulverreservoir das Glaspulver durch Adhäsion auf. Anschließend wird dies dann auf dem mit Glaspulver zu versehende Material aufgebracht.

Ist das Material nicht bereits vom Ziehprozess her mit Öl benetzt, so muss die Anhaftung des Pulvers am Material erst noch hergestellt werden, indem das Material in eine Art Formschwamm gedrückt wird, ähnlich wie beim Siebdruck. Der Formschwamm ist derart gestaltet, dass ein Kontakt nur an den zu benetzenden Stellen mit dem Material hergestellt wird. Dabei wird der Schwamm serienmäßig über automatische Beölungssysteme je nach Bedarf eingeölt. Das Glaspulver wird entweder von Hand oder von einem Pulverförderer mit Verteiler gleichmäßig auf den beölten Formschwamm aufgetragen und gelang mittels diesem auf das Material.

Dabei liegt die Konzentration des Pulvers oder des Substrates, ohne den Prozess negativ zu beeinflussen, zwischen 5 bis 10 Kugeln / cm² bis hin zu 2000 Kugeln / cm². Es sollte jedoch eine möglichst geringe Konzentration angestrebt werden, damit eventuell überflüssige Glaskugeln in dem später folgenden Prozessschritten nicht zu Problemen führen und die Kosten niedrig gehalten werden.

### Beispiel 2:

Ein mit einem zweiten Material zu verschweißendes Material soll mit Zinkpulver versehen werden, um einen Zwischenraum zum Entweichen von Schweißemissionen zu bilden. Dies wird mittels Flamm- oder Plasmaspritzen erreicht. Dazu wird ein sehr grobkörniges Zinkpulver (eher ein Granulat), mit einem Kornmitteldurchmesser von etwa 200 µm, in einem Metallspritzkopf gegeben. Die Relativgeschwindigkeit zwischen Werkstück und Metallspritzkopf werden derart eingestellt, dass kein dichter Schichtauftrag erfolgt, sondern eine gekörnte Oberfläche mit geschmolzenem Zinkpulver erzeugt wird. Die Anhaftung des Zinkpulvers wird durch das Anschmelzen im Flamm- oder Plasmaspritzstrahl erreicht. Das teils flüssige, teils fest oder teigige Zinkpulver verklebt fest mit der Oberfläche und ist somit für folgende Prozessschritte nicht nachteilhaft. Überflüssige Zinkteilchen werden in der Vorbehandlung ausgewaschen.

Das Zinkpulver fungiert in diesem Fall als Opferanode und schützt das Material zusätzlich bei korrosiven Angriff.

### Beispiel 3:

Um zwei Materialien miteinander zu verschweißen wird ein 3-Phasengemisch aus Öl, Auftragspulver und einem Trägergranulat hergestellt.

Die Materialien werden gemischt und benetzten sich dabei selber. Es entsteht ein öliges Granulat welches an seiner Oberfläche anhaftende Glaskügelchen trägt.

Nun wird ähnlich wie bei einem Staubsauger in einer Rohrleitung ein Unterdruck erzeugt und das 3-Phasengemisch über das zu benetzende Bauteil gesaugt. Dabei gibt das 3-Phasengemisch etwas von seinem Öl und seinen anhaftenden Glaspulver an das zu benetzende Bauteil ab. Die Auftragszeit beträgt dabei ca. 2 Sekunden.

Damit das 3-Phasengemisch nach dem Auftragsprozess nicht auf dem Bauteil liegen bleibt verhindert ein Quetschventil, dass neues 3-Phasengemisch nachströmt und der anstehende Unterdruck saugt über Nebenluftkanäle die Auftragsbereich frei. Somit bleibt nur noch das Glaspulver und etwas Öl auf der Oberfläche des aufzutragenden Bauteils übrig. Das Verfahren ist somit Emissionsfrei. Weder Öl noch Granulat noch Glaspulver gelangen an Stellen die nicht aufgetragen werden sollen

## Patentansprüche

1. Laserschweißverfahren zur Verbindung von zwei Materialien, wobei zumindest eines der beiden Materialien eine Beschichtung aufweist und zwischen den Materialien ein Zwischenraum zum Entweichen von Schweißemissionen gebildet wird, **dadurch gekennzeichnet, dass** der Zwischenraum durch Auftragen eines Pulvers auf zumindest einem der beiden Materialien erzeugt wird.

2. Laserschweißverfahren nach Anspruch 1, **dadurch gekennzeichnet, dass** nach Auftragen des Pulvers ein Auftrag mit Erhebungen in einem Bereich zwischen 0,1 mm und 0,3 mm, vorzugsweise 0,2 mm erzeugt wird.

3. Laserschweißverfahren nach einem der vorhergehenden Ansprüche, **dadurch gekennzeichnet, dass** als Pulver ein Zinkpulver und/oder ein Nirostapulver verwendet wird.

4. Laserschweißverfahren nach Anspruch 3, **dadurch gekennzeichnet; dass** ein gekugeltes und/oder gemahlenes Zinkpulver verwendet wird.

5. Laserschweißverfahren nach einem der vorhergehenden Ansprüche, **dadurch gekennzeichnet, dass** ein Zinkpulver mit einem Kornmitteldurchmesser von größer 0,2 mm verwendet wird.

6. Laserschweißverfahren nach einem der vorhergehenden Ansprüche, **dadurch gekennzeichnet, dass** als Pulver ein Glaspulver verwendet wird.

7. Laserschweißverfahren nach einem der vorhergehenden Ansprüche, **dadurch gekennzeichnet, dass** ein Gemisch aus Glaspulver und Öl verwendet wird.

8. Laserschweißverfahren nach einem der vorhergehenden Ansprüche, **dadurch gekennzeichnet, dass** ein hochviskoses Öl verwendet wird.

9. Laserschweißverfahren nach einem der vorhergehenden Ansprüche, **dadurch gekennzeichnet, dass** das Pulver mittels Flamm und/oder Plasmaspritzen aufgebracht wird.

10. Laserschweißverfahren nach einem der vorhergehenden Ansprüche, **dadurch gekennzeichnet, dass** das Pulver aufgestreut wird.

11. Laserschweißverfahren nach einem der vorhergehenden Ansprüche, **dadurch gekennzeichnet, dass** das Pulver mittels eines Rollschwamm und/oder Formschwamm aufgetragen wird.

12. Laserschweißverfahren nach einem der vorhergehenden Ansprüche, **dadurch gekennzeichnet, dass** eine gekörnte Oberfläche auf zumindest einem Material erzeugt wird.

13. Laserschweißverfahren nach einem der vorhergehenden Ansprüche, **dadurch gekennzeichnet, dass** ein Pulver in einem 3-Phasengemisch verwendet wird.

14. Laserschweißverfahren nach einem der vorhergehenden Ansprüche, **dadurch gekennzeichnet, dass** das 3-Phasengemisch aus einem Öl, einem Auftragspulver und einem Granulat besteht.

15. Laserschweißverfahren nach einem der vorhergehenden Ansprüche, **dadurch gekennzeichnet, dass** das 3-Phasengemisch mittels Unterdruck aufgebracht wird.
